# EUROPÄISCHE PATENTANMELDUNG

(11) **EP 1 632 303 A1**
(43) Veröffentlichungstag der Anmeldung: **08.03.2006**
(21) Anmeldenummer: 04020828.2
(22) Anmeldetag: 02.09.2004
(51) Int. Cl.: B23K 7/00, F23D 14/42, F23D 14/54

(54) **Brennschneidwerkzeug zum schnelleren, glatteren und sicheren Sauerstofftrennen von dickeren Werkstücken aus heissem oder kalten Stahl mit verbesserter Wartungsmöglichkeit und verbesserter Nutzung des sicher verfügbaren Sauerstoffvordruckes**

(71) Anmelder: Aute AG Gesellschaft für autogene Technik, 2068 Hauterive (CH)
(72) Erfinder: Lotz, Horst Karl, 2068 Hauterive/NE (CH)

(57) **Zusammenfassung**

Durch in Druckstufen geplante und entwickelte Herstellung von Schneiddüsen (3) für die Bedürfnisse von Stahlwerken mit neuartigem Schneidkanal und ergänzenden Verbesserungen auch an den Schneidbrennern (1-3) können sicherere, vielseitigere und optimale Schneidarbeiten durchgeführt werden, auch wenn die Schneidüse (3) in einer anderen Druckstufe als geplant eingesetzt wird. Die Qualität der genauer erfassten Abmessungen bei besonders guten Ausführungen und deren entsprechende Umsetzung in eine Produktion erhöht Schneidgeschwindigkeiten und Standzeiten der Schneiddüsen (3).

## Beschreibung

Bei der modernen Stahlerzeugung und -verarbeitung ist das Sauerstoff-Brennschneiden zum Unterteilen und Längsteilen, von Stahlsträngen aus Stahl-Stranggießanlagen und die dazu verwendeten Brennschneidwerkzeuge von hervorragender Bedeutung für die Produktion und Qualität von Stahlbrammen und -blöcken für die Herstellung von Blechen und Stahlprofilen. Schneidsicherheit, Schneidgeschwindigkeit, Schnittglätte, Schnittfugenbreite, eine nahezu einwandfreie geometrische Form der Schnitte, einfache und schnelle Wartung sowie entsprechender Werkzeugaustausch sind ständig zu erhaltende und zu verbessernde Eigenschaften der Brennschneidwerkzeuge.
Die Schneiddüse (3) des bis heute weltweit erfolgreichsten Brennschneidwerkzeugs ist in den Bildern 1 und 2 dargestellt wie folgt beschrieben:
Die in eine zylindrische, mit zwei Schlüsselflächen versehene Düsenaufnahme (2) als Teil des Schneidbrenners (1-2) passend und metallisch dichtend eingeschraubte Schneiddüse (3) ist dadurch gekennzeichnet, dass im Innern der aus Eintrittszylinder (4) mit Stossfläche (5), zylindrischer Düsengurgel (6) und Austrittskegelbohrung (7) bestehende Schneidkanal (4-7) und dass über den Bohrungen für den Heizflammen ― Austritt (13) um den Schneidkanal (4-7) herum Bohrungen für den Eintritt von Heizgas (14) und Heizsauerstoff (15) vorgesehen sind. Dabei wurde die Gesamtlänge L der Schneiddüse (3) vor allem durch die Länge des Schlüsselsechskants S, die von alten Düsenausführungen übernommene Länge Lg des Einschraubgewindes und ein sicherer Rest bis zu einer glattzahligen Gesamtlänge L von 30 mm bestimmt. Besonderer Wert wurde allerdings auf den Winkel der Austrittskegelbohrung und die Durchmesser der letzteren und von Eintrittszylinder (4) sowie Düsengurgel (6) gelegt und bei verschiedenen Ausführungen die Heizung optimiert zur Vermeidung gegenseitiger Beeinflussung. Danach wurde ein günstiger Druckbereich gesucht und empirisch bestimmt, bei dem die so entwickelten entweder schmale Schneidfugen, glatte Schnittflächen und / oder hohe Schneidgeschwindigkeiten aufwiesen.
Die Qualität der Düsenfertigung für Versuche und spätere Produktion lag im bisher üblichen Bereich von zehntel Millimeter für die Abmessungen und die Fertigungsrauheit bei Rz = 10 bis 40. Dabei galt die Nutzung einer rechtwinkligen Stossfläche (5), die später vorteilhaft durch eine kegelige Stossfläche mit einem Winkel von 116° ersetzt wurde, anstelle einer 40 mm bis 120 mm und mehr langen, zylindrischen Düsengurgel (6) zur Umsetzung des Sauerstoffdruckes in Sauerstoffgeschwindigkeit als verbesserndes Ausführungsprinzip, was im praktischen Betrieb auch zu erheblich günstigeren Schneidergebnissen in den Stahlwerken der ganzen Welt geführt hat.

Diese Ergebnisse und ihr Vergleich haben erkennen lassen, dass Prinzip und Abmessungen dieser Schneiddüse (3) bei intensiverer und kostenträchtigerer Planung und Entwicklung noch sehr beachtliche Möglichkeiten für Schneidleistungen, Wartung, Lebensdauer und gegen Beschädigungen aufweist.

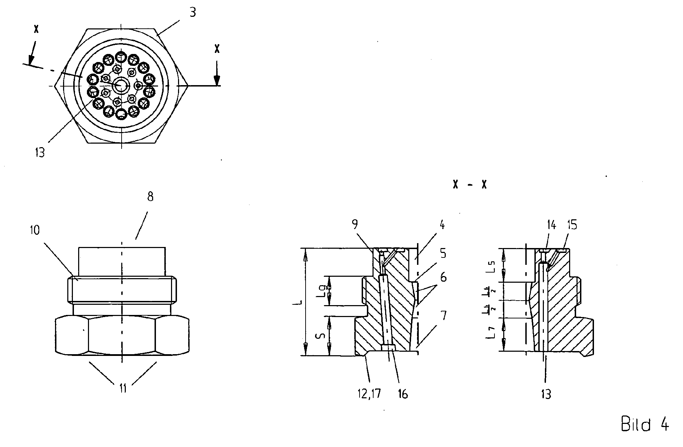

Demzufolge sieht der Patentanspruch 1 vor, den Gesamtbereich der in Stahlwerken verfügbaren Sauerstoffdrücke in gleiche oder anders geplante Druckstufen zum Beispiel von 2 bar zu 2 bar zu unterteilen und für jede Druckstufe eine neue Schneiddüse (3) zu entwickeln, und zwar ausgehend von einem neuen Schneidkanal (4-7), für den gemäß Bild 4 bei allen Durchmessern und vor allem auch zugehörigen Längen für diese Druckstufe genau berechnete und in Versuchsreihen bestätigte Maße erhält, bei denen die besten Werte für das Schneiden von kaltem und heißen Stahl erzielt werden können. Dazu werden alle endgültigen Düsengurgeln (6) jeweils bestimmter Form als Zylinder, nach Patentanspruch 2 auch als Kegelstumpf oder als Doppelkegelstumpf, aber auch die Austrittskegelbohrung durch ein einmaliges oder mehrmaliges Einschlagen genauest und feinst bearbeiteter, harter Passnadeln mit verdichteter Oberfläche nachgearbeitet. Dabei sind kegelige Formen und Zugang von beiden Seiten von besonderem Vorteil. Nur so lassen sich die bei den überschallschnellen Sauerstoffgeschwindigkeiten so wichtigen maßgenauen, glatten und oberflächenfesten Bohrungen erzielen. Die Ausführung einer Düsengurgel (6) als in Durchmesser und Länge genau für ihre Druckstufe gefertigte Form, bringt als Kegelstumpf oder gar als Doppelkegelstumpf scheinbar höhere Kosten, ist aber beim verdichtenden Einschlagen von Passnadeln von Vorteil als auch bei der Erreichung höherer Geschwindigkeiten. Auch die Lebensdauer der Schneiddüse (3) bei hoher Schneidleistung und ― qualität wird durch das Verdichten vorteilhaft beeinflusst.

### Tabelle 1: Schneiddüsen nach Druckstufen

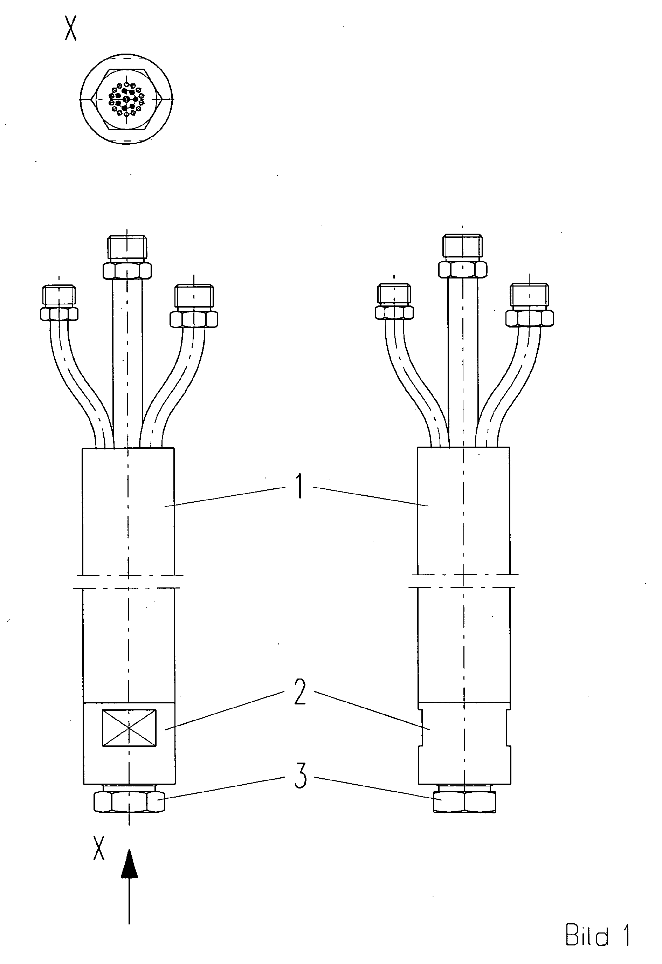

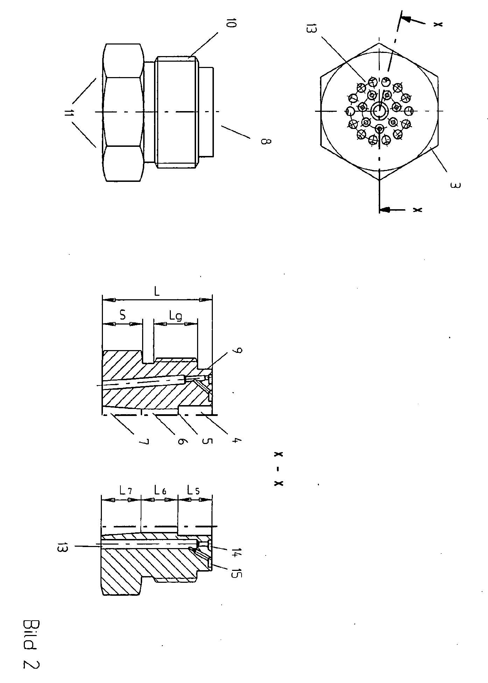

Nach Anspruch 3 und Bild 4 ist bei grundsätzlich unveränderter und nur durch die inneren Bohrungen bestimmter Gesamtlänge die alte Außenform in Bild 2 neugestaltet in der Art, dass ein ursprünglich kurzer Absatz (9) vor einem aus Sicherheitsgründen langen Einschraubgewinde (10) in einen langen Einführzylinder (9) zum schnellen und sicheren Einsetzen der Schneiddüse (3) in die innen entsprechend gestaltete Düsenaufnahme (2) und eine nach einer Reihe von Festigkeits- und Dichtversuchen festgelegten, beachtlichen Verkürzung des Einschraubgewindes für eine kürzeste Düsenwechselzeit abgeändert ist. Damit wird ein sicherer Betrieb unter ungünstigen Voraussetzungen, wie in Stahlwerken und ihren Stranggießanlagen üblich, mit kürzesten Stör- und Standzeiten ermöglicht.

In Anspruch 4 und wie in Bild 4 dargestellt können auch Lager-, Transport- und Handhabungs-Beschädigungen an der Austrittsfläche (11) der Schneiddüse (3) verhindert werden, indem die Austrittsfläche (11) gegenüber ihrem erhöhten Rand, auch Austritts-Schutzring (17) genannt, zurückverlegt ist.
Der Anspruch 5, ebenso in Bild 4 illustriert, hat die gleiche Aufgabe nur zum Schutz der in Heizflammen- Austritte (13) mittels kurzer zylindrischer oder konischer Aufweitungen der selben.
Beide Möglichkeiten können getrennt oder zusammen eingesetzt werden.

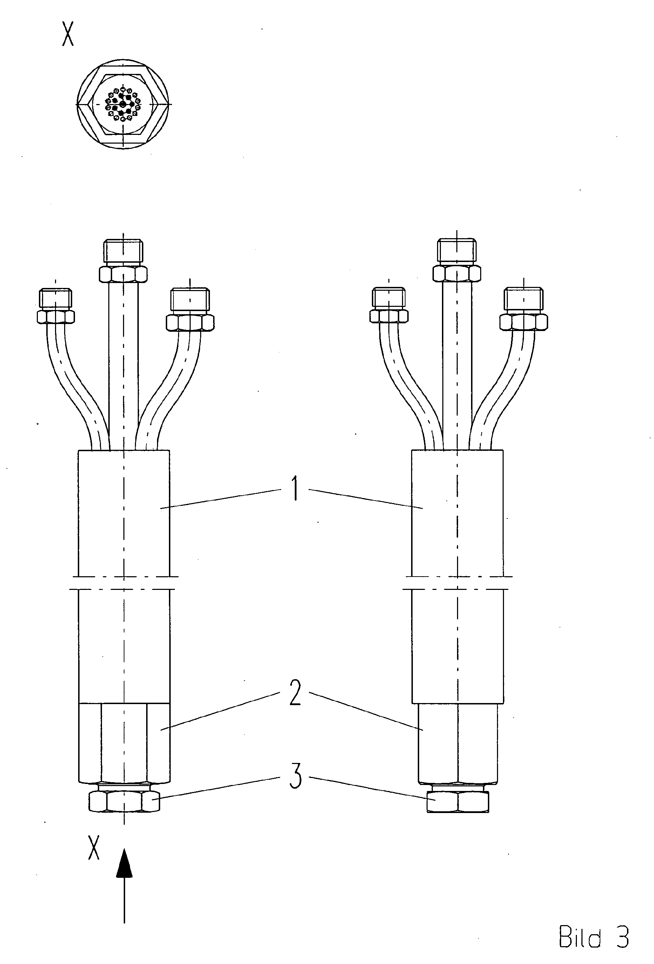

In Bild 3 ist der Anspruch 5 zeichnerisch beschrieben, in dem die Ausführung der Düsenaufnahme (2) im Innern der Schneiddüse (3) entspricht und sie statt aus einem Zylinder mit angearbeiteten Schlüsselflächen aus einem Sechskant oder einem Achtkant hergestellt. Durch die inzwischen erzielten hohen Schneidgeschwindigkeiten sind geringfügige Durchmesserunterschiede beim Gegeneinanderschneiden mit zwei Schneidbrennern (1) ohne Bedeutung, auch die Brennerbefestigung verlangt heute keinen nur zylindrischen Brennerschaft (1) mehr.

In Bild 5 und 6 sind an sich bekannte Hebel Klemmvorrichtungen dargestellt, mit denen, aus früheren Sicherheitsbetrachtungen nicht berücksichtigt, heute Schneiddüsen (3) durch eine sichere, gut dichtende Kombination von Hebelklemmung und konischer Zentrierung einfach und schnell ein- und ausgebaut werden können. Diese neuartige, und daher zum Schutzrecht angemeldete Ausführung der Schneidüsen (3) - Befestigung im Schneidbrenner (1-3) und auch der Befestigung eines Schneidbrenners (1-3) an einer Brennschneidmaschine bedarf keiner allzu großen Kräfte aber eines genauen Sitzes, was durch die konische Zentrierung sichergestellt wird. Beim Einsatz von je zwei gegeneinander arbeitenden Hebeln (20) wird nicht nur die Anpresskraft praktisch verdoppelt, sondern verbiegende oder verdrehende Momente vermieden oder verringert.

### Legende

- 1: Schneidbrenner, Brennerschaft
- 2: Düsenaufnahme
- 3: Schneiddüse
- 4: Eintrittszylinder, Eintrittsdüse
- 5: Stoßfläche, Kegelstoßfläche
- 6: Düsengurgel, Düsen- Doppelgurgel,
- 7: Austritts-Kegelbohrung
- 8: Einschraubseite
- 9: Einführzylinder
- 10: Einschraubgewinde
- 11: Austrittsfläche
- 12: Rand
- 13: Heizflammen- Austritt
- 14: Heizgas-Eintritt
- 15: Heizsauerstoff-Eintritt
- 16: Austritts- Aufweitung
- 17: Austritts-Schutzring
- 18: Haltering
- 19: Klemmvorrichtung
- 20: Hebel
- 21: Brennerhalter

- L: Länge der Schneidüse
- S: Länge des Schlüsselsechskantes
- Lg: Länge des Gewindes

## Patentansprüche

1. Brennschneidwerkzeug zum schnelleren, glatteren und sicheren Sauerstofftrennen von dickeren Werkstücken aus heißem oder kalten Stahl mit verbesserter Wartungsmöglichkeit und verbesserter Nutzung des sicher verfügbaren Sauerstoffvordruckes,
**dadurch gekennzeichnet, dass** ein Schneidbrenner (1-2) mit einer Düsenaufnahme (2) und einer Schneiddüse (3) für einen bestimmten, aus einer Reihe nahe beieinander liegender Sauerstoffvordrücke bestimmt hergestellt ist, wobei eine aus zylindrischer oder leicht konisch verengender Eintrittsdüse (4), diese im weiteren Verlauf begrenzende Kegelstoßfläche (5), eine enge die Düsengurgel (6) darstellende zylindrische oder leicht konisch verengende Düsenbohrung (6) und eine Austrittskegelbohrung (7) zusammen einen Schneidkanal (4-7) bilden und der Durchmesser, aber insbesondere die Länge der Düsengurgel (6) und die Länge der Kegelstoßfläche mit einem Winkel von 118° zu Lasten der Eintrittsdüse (4) bei einer festen Gesamtlänge diesem bestimmten Vordruck zugeordnet festgelegt sind und mit größter Oberflächenfeinheit, das heißt Rauheitswert Rz = 0,05 beziehungsweise Ra = 0,025 mittels konischer, feinstgefertigter Nadeln hergestellt ist. Die Genauigkeit einmal in entsprechenden Versuchen als gut bis sehr gut festgestellter Abmessungen erzielt, müssen mindestens mit einem Grundtoleranzgrad IT4 bei weiteren Fertigungen wiederholt oder unterschritten werden.

2. Brennschneidwerkzeug zum schnelleren, glatteren und sicheren Sauerstofftrennen von dickeren Werkstücken aus heißem oder kalten Stahl mit verbesserter Wartungsmöglichkeit und verbesserter Nutzung des sicher verfügbaren Sauerstoffvordruckes nach vorstehendem Anspruch 1, **dadurch gekennzeichnet, dass** ein Schneidbrenner (1-2) mit einer Düsenaufnahme (2) und einer Schneiddüse (3) für einen bestimmten, aus einer Reihe nahe beieinander liegender Sauerstoffvordrücke bestimmt hergestellt ist, wobei eine aus zylindrischer oder leicht konisch verengender Düsenbohrung Eintrittsdüse (4), diese im weiteren Verlauf begrenzende Kegelstoßfläche (5), eine enge die Düsen-Doppelgurgel (6) bildende Doppel-Kegelstumpfbohrung und eine Austrittskegelbohrung (7) zusammen einen Schneidkanal (1-7) bilden und die Durchmesser, aber insbesondere die Längen der Doppel-Kegelstumpfbohrungen und die Länge der Kegelstoßfläche mit einem Winkel größer / gleich 118° zu Lasten der Eintrittsdüse (4) bei einer festen Gesamtlänge diesem bestimmten Vordruck zugeordnet festgelegt sind und mit größter Oberflächenfeinheit das heißt Rauheitswert Rz = 0,05 beziehungsweise Ra = 0,025 mittels konischer, feinstgefertigter Nadeln hergestellt ist. Die Genauigkeit einmal in entsprechenden Versuchen als gut oder sehr gut festgestellter Abmessungen erzielt, müssen mindestens mit einem Grundtoleranzgrad lT4 bei weiteren Fertigungen wiederholt oder unterschritten werden.

3. Brennschneidwerkzeug zum schnelleren, glatteren und sicheren Sauerstofftrennen
von dickeren Werkstücken aus heißem oder kalten Stahl mit verbesserter
Wartungsmöglichkeit und verbesserter Nutzung des sicher verfügbaren Sauerstoffvordruckes nach einem der vorstehenden Ansprüche 1 und 2, **dadurch gekennzeichnet, dass** die Einschraubseite (8) der Schneiddüse (3) mit einem mindestens 8 mm langen Einführzylinder (9) zur leichteren und schnelleren Einführung in die Düsenaufnahme (2) versehen ist, wogegen das Einschraubgewinde (10) entsprechend gekürzt ein schnelleres Einschrauben der Schneiddüse (3) in die Düsenaufnahme (2) erlaubt, obwohl die Gesamtlänge L der Schneiddüse von 30 mm nicht vergrößert wird.

4. Brennschneidwerkzeug zum schnelleren, glatteren und sicheren Sauerstofftrennen
von dickeren Werkstücken aus heißem oder kalten Stahl mit
verbesserter Wartungsmöglichkeit und verbesserter Nutzung des sicher verfügbaren Sauerstoffvordruckes nach einem der vorstehenden Ansprüche 1 bis 3,
**dadurch gekennzeichnet, dass** die Austrittsfläche (11) der Schneiddüse (3) mit
einem tellerartig hochgezogenen Rand (12) zum Schutz der empfindlichen Austrittsöffnungen (13) für Heizflammen und Schneidsauerstoff gegen Beschädigung durch verformende Berührung versehen ist. Durch einen in Durchmessern, Länge und Winkel je nach Düsenabmessung zu einem zusätzlichen Austrittskonus erweiterter Rand werden die austretenden Heizflammen und der von ihnen umhüllte Schneidstrahl wieder eingeengt, die Strahlgeschwindigkeit und damit die Schneidgeschwindigkeit steigen und die Schnittfugenbreite sinkt.

5. Brennschneidwerkzeug zum schnelleren, glatteren und sicheren Sauerstofftrennen von dickeren Werkstücken aus heißem oder kalten Stahl mit verbesserter Wartungsmöglichkeit und verbesserter Nutzung des sicher verfügbaren Sauerstoffvordruckes
nach einem der vorstehenden Ansprüche 1 bis 4, **dadurch gekennzeichnet, dass** die an sich gegen mechanische Berührungen empfindlichen Heizflammen-Austrittsbohrungen (13) an der Austrittsfläche (11) der Schneiddüse (3) mit einer kurzen, zylindrischen oder konischen Aufweitung (14) an ihrem Austrittsende versehen sind.

6. Brennschneidwerkzeug zum schnelleren, glatteren und sicheren Sauerstofftrennen von dickeren Werkstücken aus heißem oder kalten Stahl mit verbesserter Wartungsmöglichkeit und verbesserter Nutzung des sicher verfügbaren Sauerstoffvordruckes nach einem der obigen Ansprüche 1 bis 5, **dadurch gekennzeichnet, dass** die Düsenaufnahme (2) am unteren Ende des Schneidbrenners (1-2) außen als Vier-, Sechs- oder als Achtkant ausgebildet erst mit einem Gewinde und dann mit einer Zylinderbohrung als Führung vor einer Dichtfläche passend zur Aufnahme einer Schneiddüse (1) versehen ist.

7. Brennschneidwerkzeug zum schnelleren, glatteren und sicheren Sauerstofftrennen von dickeren Werkstücken aus heißem oder kalten Stahl mit verbesserter Wartungsmöglichkeit und verbesserter Nutzung des sicher verfügbaren Sauerstoffvordruckes nach einem der obigen Ansprüche 1 bis 6, **dadurch gekennzeichnet, dass** die Düsenaufnahme (2) statt mit einem Innengewinde zur Düsenbefestigung am unteren Ende mit einer Klemmeinrichtung (19), die mit einem oder zwei gegeneinander waagerecht bewegbaren Hebeln (20) versehen, umfassend unter die Schneiddüse (3) greift und sie mittels schiefer Ebenen in Achse mit der Düsenaufnahme (2) dichtend nach oben andrückt und dort festhält.

8. Brennschneidwerkzeug zum schnelleren, glatteren und sicheren Sauerstofftrennen von dickeren Werkstücken aus heißem oder kalten Stahl mit verbesserter Wartungsmöglichkeit und verbesserter Nutzung des sicher verfügbaren Sauerstoffvordruckes nach einem der obigen Ansprüche 1 bis 7, **dadurch gekennzeichnet, dass** der Schneidbrenner (1-2) mit einem oder mehr konischen Halteringen (18) versehen, in einen mit konischer, mittels Hebel (20) einklappbarer und zu den Halteringen (18) passender Klemmvorrichtung (19) am Brennerhalter (21) festgeklemmt ist.
